Europäisches Patentamt

(19) European Patent Office

Office européen des brevets

(11) Publication number: **0 279 479 B1**

# EUROPEAN PATENT SPECIFICATION

(12)

(45) Date of publication of patent specification:
**21.11.91 Bulletin 91/47**

(51) Int. Cl.$^5$: **G01L 3/04**

(21) Application number: **88200149.8**

(22) Date of filing: **16.01.88**

(54) Overload protection device for torque measuring transducers.

(30) Priority: **20.01.87 SE 8700198**

(43) Date of publication of application:
**24.08.88 Bulletin 88/34**

(45) Publication of the grant of the patent:
**21.11.91 Bulletin 91/47**

(84) Designated Contracting States:
**DE GB IT**

(56) References cited:
**DE-A- 2 142 469**
**US-A- 2 403 952**
**US-A- 3 448 610**
**US-A- 3 796 093**
**US-A- 4 506 554**

(73) Proprietor: **ASEA BROWN BOVERI AB**
**S-721 83 Västeras (SE)**

(72) Inventor: **Aminder,Christer**
**Skymningsgatan 12**
**S-723 48 Västeras (SE)**
Inventor: **Nordvall,Jan O.**
**Rundhällsvägen 10**
**S-722 31 Västeras (SE)**

(74) Representative: **Boecker, Joachim, Dr.-Ing.**
**Rathenauplatz 2-8**
**W-6000 Frankfurt a.M. 1 (DE)**

## Description

The invention relates to an overload protection device for torque me  uring transducers according to the precharacterising part of Claim 1. The device is preferably meant for torque measuring in rotating axles.

Transducer for measuring the torque in rotating axles are designed according to different principles. In some transducers the twist of the axle is measured over a certain axial length by the phase difference between the signals from two gear rings. In other transducers, the shearing stress in the axle is measured by different methods, for example by means of strain gauges, whereby the strain gauge and the signal processing circuit, mounted on the axle, are supplied via a rotating transformer, the measuring signal being transmitted in a wireless manner.

In still other transducers, the shearing stress is measured by magneto-elastic methods, such as, for example, in SE-B-167387, in which the magnetic anisotrophy in the axle, caused by the shearing stress, is measured with the aid of a system of magnetizing and sensing magnetic poles arranged around the axle.

In a magneto-elastic transducer according to US-A-4,506,554, a measuring axle is provided with a measuring sleeve which, in two separate zones, has been formed with slots which in one zone has a +45° deviation from the axial direction and in the other zone a –45° deviation from the axial direction. The difference in reluctance between the two zones, arising when applying a torque, is sensed by a surrounding coil system.

In all of the afore-mentioned transducers, the demands concerning the choice of the stress level in the measuring axle at the upper limit of the measurement range are contradictory : To obtain a good signal/noise ratio and a small temperature dependence, a high maximum measuring stress should be chosen, but to obtain a good overload capacity without the zero point of the signal being changed, a low maximum measuring stress must be chosen, resulting in the signal/noise ratio and the temperature dependence being necessarily adversely affected.

Thus, in prior art transducers there is a conflict between the demand for a high measuring stress in the axle to obtain a good signal/noise ratio as well as a low temperature dependence and the demand for a low measuring stress in the axle to obtain a good overload capacity.

The invention of claim 1 aims at designing an overload protection device for torque measuring transducers of the above-mentioned kind which enables the combination of high stress in the measuring axle within the measuring range and a high overload protection against a torque exceeding the measuring range.

To achieve this aim the invention of claim 1 suggests an overload protection device for torque measuring transducers according to the introductory part of Claim 1, which is characterized by the features of the characterizing part of Claim 1.

Further developments of the invention are characterized by the features of the additional claims.

The invention of claim 1 eliminates the above described conflict with prior art transducers by constructing the measuring axle with such a slender dimension that the maximum measuring stress brings about a satisfactory twist of the measuring axle while at the same time achieving a high overload capacity by allowing — at a certain twist of the measuring axle — a stronger structural member to assume the greater part of the torque.

The device will now be described in greater detail with reference to the accompanying drawings showing — by way of example — in

Figure 1     an embodiment of a device according to the invention which, when the measuring axle is loaded above a certain limit, takes over the greater part of the excess load, and

Figure 2     an alternative embodiment of the engagement of teeth between two gear wheels in a device according to Figure 1 to obtain an accurately-defined backlash.

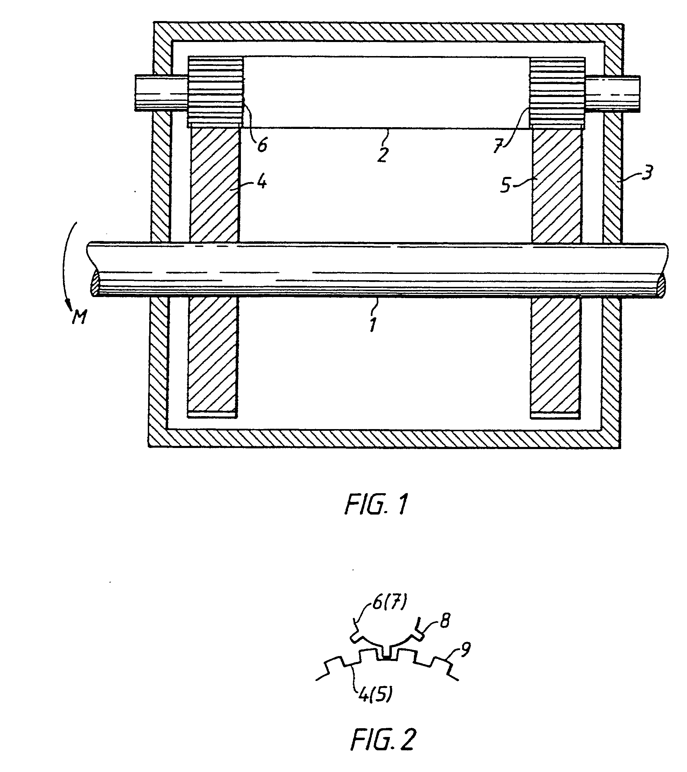

In the preferred embodiment of the invention shown in Figure 1, the torque-loaded measuring axle 1 and the heavier structural member which is to take up the main part of the overload, in this case in the form of a second axle 2, are illustrated. The second axle 2 is mounted in a housing 3, which is suitably journalled riding on the measuring axle 1. The housing is prevented from rotating by means of a link to a fixed point (not shown). On the measuring axle 1 two larger gear wheels 4 and 5 are attached, without backlash, at such a distance from one another that a reasonable twist between the gear wheels is obtained when the maximum measuring load has been reached thus also permitting satisfactory space between the gear wheels to accommodate a torque transducer, for example according to the above-mentioned US-A-4,506,554.

On the second axle 2, the overload axle, two smaller gear wheels 6, 7 are arranged without backlash, preferably milled out directly in the axle 2. These gear wheels 6, 7 are in engagement with the respective gear wheels 4, 5 with a well-defined total backlash. This backlash is dimensioned so as to be eliminated by the twist of the measuring axle 1 between the gear wheels 4, 5 upon application of a torque which, with a suitable margin, exceeds the maximum measuring torque. If Figure 1 were a reproduction on a 1 : 1 scale, the total backlash would be about 1 mm, half of it in either torque direction. A practicable backlash may be as small as ± 0.1 mm.

The backlash may be distributed equally between the two engagements of teeth. To facilitate adjusting the correct neutral position, so as to obtain the same backlash in both torque directions, either of the engagements 4, 6 or 5, 7 can be made as free from backlash as possible while the other engagement of teeth can be made, for example, as shown in Figure 2 with thinner teeth 8 in the gear wheels 6, 7 of the overload axle than the corresponding teeth 9 in the gear wheels 4, 5 of the measuring axle 1.

The second axle 2, the overload axle, is described above as the stronger structural member which is to take over the major part of the overload. However, in Figure 1 this axle is shown with only insignificantly larger diameter than that of the measuring axle 1. This dimensioning is sufficient due to the fact that, when the backlash has been eliminated upon overload, the torque in the second axle 2 is geared down. With a relationship between the gear wheels as shown in Figure 1, the torque is geared down to about one-fourth, resulting in insignificant twisting of the second axle 2. The additional load on the measuring axle 1, caused by the overload, is therefore very small.

## Claims

1. Overload protection device for torque measuring transducers comprising a measuring axle (1) intended for a certain maximum measurement range, **characterized** in that

— the measuring axle (1) is rotatably journalled in a housing (3), in which housing part of the measuring axle is arranged to define a measuring distance,

— the measuring axle at each end of the measuring distance is provided with a larger gear wheel (4, 5) attached to the axle without backlash,

— said larger gear wheels are in engagement, with a certain well-defined total backlash, with respective smaller gear wheels (6, 7) which are arranged without backlash on a second axle (2) being also rotatably journalled in the housing (3), and

— when applying a load on the measuring axle which, with a certain margin, exceeds the measurement range, the twist in the measuring axle obtained over the measuring distance between the two larger gear wheels (4, 5) is of such magnitude that the well-defined total backlash between the teeth has been eliminated, the measuring axle thus being relieved by said second axle.

2. Overload protection device according to Claim 1, **characterized** in that the total backlash is provided in one engagement of gears (4, 6 ; 5, 7) only while the other engagement of gears is designed with as small a backlash as possible.

3. Overload protection device according to any of Claims 1 or 2, **characterized** in that the smaller gear wheels (6, 7) on the second axle (2) are manufactured by milling them out in said second axle.

## Patentansprüche

1. Überlastungsschutzvorrichtung für Drehmoment-Meßgeräte, zu denen eine Meßwelle (1) gehört, die für einen bestimmten maximalen Meßbereich ausgelegt ist, **dadurch gekennzeichnet, daß**

— die Meßwelle (1) drehbar in einem Gehäuse (3) gelagert ist, in welchem Gehäuse ein Teil der Meßwelle so angeordnet ist, daß sie den Meßabstand definiert,

— die Meßwelle an jedem Ende des Meßabstandes mit einem größeren Zahnrad (4, 5) versehen ist, welches ohne Spiel auf der Welle befestigt ist,

— die genannten größeren Zahnräder mit einem bestimmten genau definierten Gesamtspiel mit entsprechenden kleineren Zahnrädern (6, 7) im Eingriff stehen, die ohne Spiel auf einer zweiten Welle (2) angeordnet sind, die ebenfalls drehbar in dem Gehäuse (3) gelagert ist, und

— bei Belastung der Welle mit einer Last, die unter Berücksichtigung einer bestimmten Toleranz den Meßbereich überschreitet, die Torsion, die über den Meßabstand zwischen den beiden größeren Zahnrädern (4, 5) in der Meßwelle auftritt, so groß ist, daß das genau definierte Spiel zwischen den Zähnen eliminiert wird, wodurch die Meßwelle durch die genannten zweiten Welle entlastet wird.

2. Überlastungsschutzvorrichtung nach Anspruch 1, **dadurch gekennzeichnet, daß** das gesamte Spiel in einem Eingriff von Zahnrädern (4, 6 ; 5, 7) untergebracht ist, während der andere Eingriff von Zahnrädern mit einem möglichst kleinen Spiel versehen ist.

3. Überlastungsschutzvorrichtung nach einem der Ansprüche 1 oder 2, **dadurch gekennzeichnet, daß** die kleineren Zahnräder (6, 7) auf der zweiten Welle (2) durch Einfräsen in die zweite Welle hergestellt sind.

## Revendications

1. Dispositif de protection contre les surcharges pour es transducteurs de mesure de couple comprenant un arbre de mesure (1) prévu pour une certaine plage de mesure maximale, **caractérisé** en ce que :
— l'arbre de mesure (1) est monté de façon tournante dans un carter (3), dans lequel une partie de l'arbre de mesure est disposée de façon à définir une distance de mesure,
— à chaque extrémité de la distance de mesure, l'arbre de mesure porte une grande roue dentée (4, 5) qui est fixée à l'arbre sans jeu,
— les grandes roues dentées engrènent, avec un certain jeu total bien défini, avec de petites roues dentées respectives (6, 7) qui sont montées sans jeu sur un second arbre (2) qui est également monté de façon tournante dans le carter (3), et
— lorsqu'on applique sur l'arbre de mesure une charge qui, avec une certaine marge, dépasse la plage de mesure, la torsion de l'arbre de mesure que l'on obtient sur la distance de mesure entre les deux grandes roues dentées (4, 5), a une valeur telle que le jeu total bien défini entre les dents a été éliminé, l'arbre de mesure étant ainsi déchargé par le second arbre.

2. Dispositif de protection contre les surcharges selon la revendication 1, **caractérisé** en ce que le jeu total est établi dans un seul engrènement de roues dentées (4, 6 ; 5, 7), tandis que l'autre engrènement de roues dentées est conçu avec un jeu aussi faible que possible.

3. Dispositif de protection contre les surcharges selon l'une quelconque des revendications 1 ou 2, **caractérisé** en ce que les petites roues dentées (6, 7) sur le second arbre (2) sont fabriquées par fraisage de ces dents dans le second arbre.

FIG. 1

FIG. 2